# EUROPEAN PATENT APPLICATION

(11) **EP 3 432 247 A1**
(43) Date of publication of application: **23.01.2019**
(21) Application number: 18184541.3
(22) Date of filing: 19.07.2018
(51) Int. Cl.: G06Q 30/06, G07G 1/00, G06K 9/00

(54) **IMAGE PROCESSING APPARATUS, SERVER DEVICE, AND METHOD THEREOF**

(30) Priority: 21.07.2017 JP 2017142010
(71) Applicant: Toshiba TEC Kabushiki Kaisha, Tokyo 141-8562 (JP)
(72) Inventor: SAWADA, Takayuki, Shinagawa-ku,, Tokyo 141-8562 (JP)
(74) Representative: Takeuchi, Maya

(57) **Abstract**

An image processing apparatus includes a network interface configured to communicate with a server device, a first camera, and a processor. The processor is configured to identify an item presented by a user and imaged by the first camera using a list of items received from the server device through the network interface, wherein the items in the list are displayed at a location accessed by the user.

## Description

### FIELD

Embodiments described herein relate generally to an image processing apparatus, a server device, and a method thereof.

### BACKGROUND

There is an image processing apparatus for capturing an image of an item placed in a shopping basket from above to identify the item and its price. The image processing apparatus retrieves dictionary information about the feature values of various item images in advance and specifies one of the items, the feature value of which matches or is similar to the one of the captured item image.

However, it takes much time for the matching process when the size of the dictionary is big, and this situation may happen easily in a retail store that sells various kinds of items.

To this end, there is provided an image processing apparatus comprising: a network interface configured to communicate with a server device; a first camera; and a processor configured to identify an item presented by a user and imaged by the first camera using a list of items received from the server device through the network interface, wherein the items in the list are displayed at a location accessed by the user.

Preferably, the processor: obtains first dictionary information about a feature value of each of the listed items; and determines that the presented item is one of the listed items by comparing a feature value of the imaged item with the feature value of each of the listed items.

Preferably, when the processor fails to identify the presented item from the list, the processor: obtains second dictionary information about a feature value of each of items that are not listed in the list; and determines that the presented item is one of the items not listed in the list by comparing the feature value of the imaged item with the feature value of each of the items not listed in the list.

The image processing apparatus may further comprise: a second camera, wherein the processor identifies the user with the second camera and acquires the list of items associated with the user.

The image processing apparatus may further comprise: a scale configured to detect a basket, wherein when the scale detects the basket, the second camera images the user and the processor acquires the list associated with the imaged user.

Preferably, the processor extracts an actual item area for the presented item from the image taken by the first camera.

The image processing apparatus may further comprise a distance sensor that measures a distance from the sensor to the presented item, wherein the processer extracts the actual item area based on the measured distance.

Preferably, when the presented item is identified, the processor calculates a price of the presented item.

Preferably, when the price is paid, the processor deletes the list from the server.

The present invention further relates to a server device configured to communicate with a sensor and a camera, comprising: a memory configured to store information about candidate items to be purchased by a user; and a processor configured to: receive a signal from the sensor; identify a location of the user based on the signal; identify the user with an image imaged by the camera; acquire information about items displayed at the identified location; and store the acquired information about the items in the memory as the candidate items to be purchased by the user.

Preferably, the sensor is an infra-red sensor, and when the user approaches the location, the processor receives the signal from the sensor.

Preferably, the processor receives from the sensor a sensor ID associated with the location.

Preferably, the location is a predetermined division of a shelf.

Preferably, in response to a request from an image processing apparatus for a checkout process, the processor transmits information about the candidate items to the image processing apparatus.

Preferably, when the checkout process is completed, the processor removes the information about candidate items from the memory.

The present invention also relates to a method performed by a server device configured to communicate with a sensor and a camera, the method comprising: receiving a signal from the sensor; identifying a location of a user based on the signal; identifying the user with an image imaged by the camera; acquiring information about items displayed at the identified location; and storing the acquired information about the items in a memory as candidate items to be purchased by the user.

Preferably, the sensor is an infra-red sensor, and when the user approaches the location, the signal is received from the sensor.

Preferably, a sensor ID associated with the location is received from the sensor.

Preferably, the location is a predetermined division of a shelf.

The method may further comprise in response to a request from an image processing apparatus for a checkout process, transmitting information about the candidate items to the image processing apparatus.

### DESCRIPTION OF THE DRAWINGS

Fig. 1 is a block diagram schematically illustrating an example of a configuration of a specifying system according to an embodiment;
Fig. 2 is a block diagram schematically illustrating an example of a configuration of a server device according to an embodiment;
Fig. 3 is a diagram schematically illustrating an example of a configuration of a checkout apparatus according to an embodiment;
Fig. 4 is a block diagram schematically illustrating an example of a configuration of the checkout apparatus according to an embodiment;
Fig. 5 is a diagram schematically illustrating an example of a configuration of an item shelf according to an embodiment;
Fig. 6 is a diagram illustrating an example of a configuration of a user information table according to an embodiment;
Fig. 7 is a diagram illustrating an example of a configuration of a shelf division ID table according to an embodiment;
Fig. 8 is a diagram illustrating an example of a configuration of a shelf division information table according to an embodiment;
Fig. 9 is a diagram illustrating an example of a configuration of a candidate list table according to an embodiment;
Fig. 10 is a flowchart for depicting an example of the operation of the server device according to an embodiment; and
Fig. 11 is a flowchart for depicting an example of the operation of the checkout apparatus according to an embodiment.

### DETAILED DESCRIPTION

In accordance with an embodiment, an image processing apparatus includes a network interface configured to communicate with a server device, a first camera, and a processor. The processor is configured to identify an item presented by a user and imaged by the first camera using a list of items received from the server device through the network interface, wherein the items in the list are displayed at a location accessed by the user.

Hereinafter, embodiments will be described with reference to the accompanying drawings.

A specifying system according to an embodiment specifies an item based on a captured image obtained by photographing the item. For example, the specifying system is installed in a retail store for selling items. The specifying system specifies an item that a user wants to purchase by photographing the item placed in a shopping basket the user sets on a table in the retail store. For example, the specifying system may specify any kind of item that could be sold at a retail store.

Here, it is assumed that the specifying system for specifying an item is installed in a predetermined retail store.

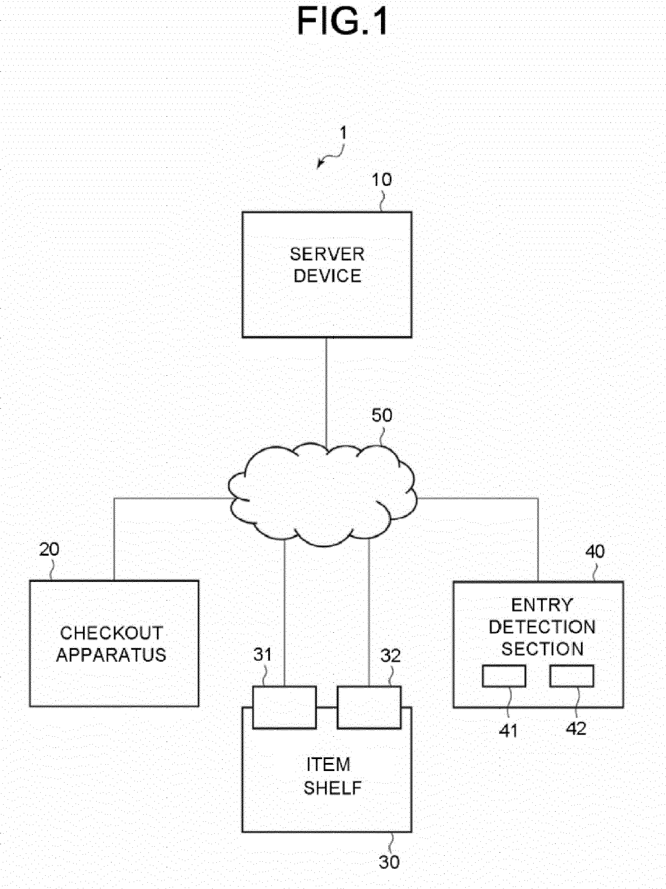

Fig. 1 is a block diagram illustrating an example of a configuration of a specifying system 1.

As shown in Fig. 1, the specifying system 1 includes a server device 10, an image processing apparatus as a checkout apparatus 20, an item shelf 30, an entry detection section 40, and a network 50. In addition to the components as shown in Fig. 1, the specifying system 1 may further include or exclude a specific component as required.

The server device 10 controls the specifying system 1. For example, the server device 10 transmits and receives data to and from each device and section via the network 50. The server device 10 collects data from each device and section. The server device 10 transmits necessary data to each device and section.

The server device 10 is described later in detail.

The checkout apparatus 20 handles a checkout process for an item to be purchased by a user. The checkout apparatus 20 is installed near an exit of a retail store or the like. The checkout apparatus 20 performs the checkout process on an item in a shopping basket carried by a user in a retail store. The checkout apparatus 20 photographs the item in the shopping basket to specify the item in the shopping basket. The checkout apparatus 20 then calculates the price of the specified item.

The checkout apparatus 20 is described in detail later.

The item shelf 30 stores an item. For example, the item shelf 30 is supplemented with items by a store clerk.

The item shelf 30 includes a shelf access sensor 31 and a user sensor 32.

The item shelf 30, the shelf access sensor 31 and the user sensor 32 are described in detail later.

The entry detection section 40 detects the user who enters the retail store. The entry detection section 40 is installed near an entrance of the retail store. The entry detection section 40 detects a user who enters the retail store from the entrance. The entry detection section 40 includes a reader 41, and a camera 42.

The reader 41 reads a user ID from a portable terminal (e.g., a card) possessed by a user who enters the retail store. For example, the reader 41 reads the user ID from an IC chip or a RF-ID possessed by the user. The user holds his/her portable terminal over the reader 41 at the time of entering the retail store. The reader 41 acquires the user ID from the portable terminal held over by the user.

The reader 41 transmits the acquired user ID to the server device 10.

The camera 42 photographs a face of the user who enters the retail store. For example, the camera 42 is installed in the vicinity of a ceiling of the entrance toward the entrance of the store. The camera 42 is a CCD camera or the like.

The camera 42 transmits a captured image to the server device 10.

The network 50 connects the server device 10, the checkout apparatus 20, the shelf access sensor 31, the user sensor 32 and the entry detection section 40. The network 50 is, for example, a local area network (LAN) (e.g., an intranet) in the retail store.

The specifying system 1 may have a plurality of item shelves 30. The number of the item shelves 30 of the specifying system 1 is not limited to a specific number.

Next, the server device 10 is described.

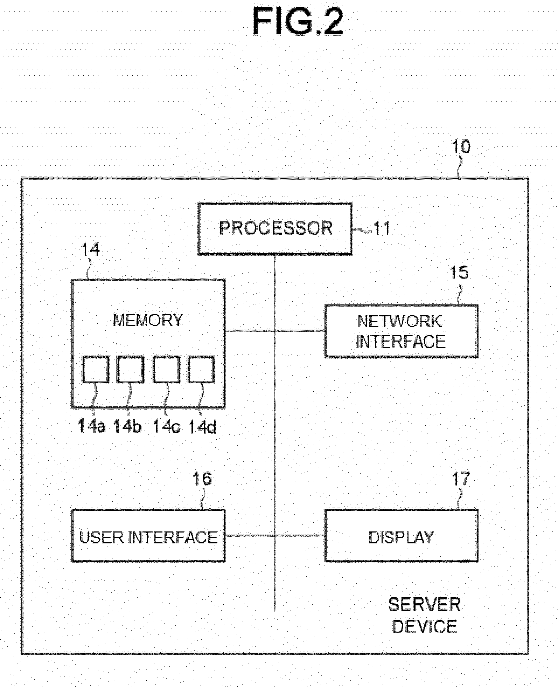

Fig. 2 is a block diagram illustrating an example of a configuration of the server device 10.

In the example of the configuration shown in Fig. 2, the server device 10 includes a processor 11, a memory 14, a network interface 15, a user interface 16 and a display 17. The processor 11, the memory 14, the network interface 15, the user interface 16 and the display 17 are connected to each other via a data bus. In addition to the components as shown in Fig. 2, the server device 10 may further include or exclude a specific component as required.

The processor 11 controls the operation of the whole server device 10. The processor 11 may include an internal memory and various interfaces. The processor 11 realizes various processes by executing programs stored in an internal memory or the memory 14 in advance. The processor 11 is, for example, a central processing unit (CPU).

A part of various functions realized by execution of the programs by the processor 11 may be realized by a hardware circuit. In this case, the processor 11 controls functions executed by the hardware circuit.

The memory 14 stores various data. For example, the memory 14 functions as a read-only memory (ROM), a random-access memory (RAM) and a non-volatile memory (NVM).

For example, the memory 14 stores control programs and control data. The control program and the control data are stored in advance according to the specification of the server device 10. For example, the control program is executed to realize functions by the server device 10.

The memory 14 temporarily stores data being processed by the processor 11. The memory 14 may store data necessary for executing an application program, an execution result of the application program, and the like.

The memory 14 includes a storage area 14a for storing a user information table, a storage area 14b for storing a shelf division ID table, a storage area 14c for storing a shelf division information table, and a storage area 14d for storing a candidate list table. The user information table, the shelf division ID table, the item table and the candidate list table are described in detail later.

The network interface 15 is used for transmitting and receiving data to and from an external device through the network 50. The network interface 15 functions as an interface for transmitting and receiving data to and from the checkout apparatus 20, the shelf access sensor 31, the user sensor 32 and the entry detection section 40. For example, the network interface 15 supports a LAN connection.

The user interface 16 receives an input of various operations from an operator. The user interface 16 transmits a signal indicating the received operation to the processor 11. For example, the user interface 16 is a keyboard, a numeric keypad, and a touch panel.

The display 17 displays various kinds of information under the control of the processor 11. For example, the display 17 is a liquid crystal monitor. If the user interface 16 is a touch panel or the like, the display 17 may be integrated with the user interface 16.

Next, the checkout apparatus 20 is described.

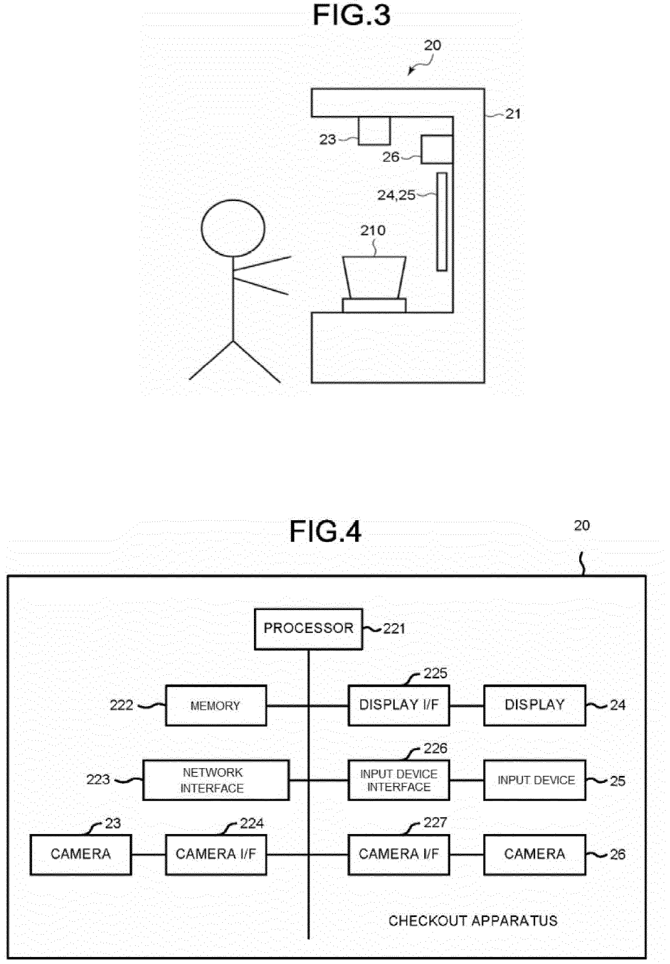

As shown in Fig. 3, the checkout apparatus 20 includes a housing 21, a camera 23, a display 24, an input device 25 and a camera 26.

The housing 21 is a frame for forming an outer shape of the checkout apparatus 20. The housing 21 is formed in such a manner that a shopping basket 210 is placed therein. In the example shown in Fig. 3, the housing 21 has a U shape and is formed in such a manner that the shopping basket 210 can be placed therein.

The camera 23 photographs the item in the shopping basket 210. In the example shown in Fig. 3, the camera 23 is installed so as to photograph the shopping basket 210 from above. The camera 23 may be installed so as to photograph the item in the shopping basket 210 obliquely from above. The position and direction in which the camera 23 is installed are not limited to specific configurations.

The checkout apparatus 20 may include a plurality of cameras 23. In this case, the plurality of cameras 23 may be installed so as to photograph the item in the shopping basket 210 at different positions and angles, respectively.

For example, the camera 23 is a charge-coupled device (CCD) camera or the like. The camera 23 may capture invisible light. The configuration of the camera 23 is not limited to a specific configuration.

The display 24 is used for displaying an image output by a processor 221 described later. The display 24 is, for example, a liquid crystal monitor.

Various operation instructions are input by a user of the checkout apparatus 20 through the input device 25. The input device 25 transmits data indicating an operation instruction input by the user to the processor 221. The input device 25 is, for example, a keyboard, a numeric keypad, or a touch panel. The input device 25 may receive an input of a gesture from the user.

Here, the input device 25 is a touch panel, and is integrated with the display 24.

The camera 26 photographs the face of the user who places the shopping basket 210. The camera 26 photographs the user who places the shopping basket 210 from the front. In the example shown in Fig. 3, the camera 26 is installed on a surface where the display 24 and the input device 25 are arranged.

For example, the camera 26 is a CCD camera or the like. The camera 26 may capture invisible light. The configuration of the camera 26 is not limited to a specific configuration.

The camera 23, the display 24, the input device 25 or the camera 26 may be integrally formed with the housing 21.

The checkout apparatus 20 may include lighting for illuminating the item in the shopping basket 210.

Next, an example of the configuration of the checkout apparatus 20 is described.

Fig. 4 is a block diagram illustrating an example of a configuration of the checkout apparatus 20.

As shown in Fig. 4, the checkout apparatus 20 includes the camera 23, the display 24, the input device 25, the camera 26, a processor 221, a memory 222, a network interface 223, a camera interface 224, a display interface 225, an input device interface 226, a camera interface 227, and the like. The processor 221, the memory 222, the network interface 223, the camera interface 224, the display interface 225, the input device interface 226 and the camera interface 227 are connected to each other via a data bus or the like.

The camera interface 224 and the camera 23 are connected to each other via a data bus or the like. The display interface 225 and the display 24 are connected to each other via the data bus or the like. The input device interface 226 and the input device 25 are connected to each other via the data bus or the like. The camera interface 227 and the camera 26 are connected to each other via the data bus or the like.

In addition to the components as shown in Fig. 4, the checkout apparatus 20 may further include or exclude a specific component as required.

The camera 23, the display 24, the input device 25 and the camera 26 are as described above.

The processor 221 controls the operation of the entire checkout apparatus 20. The processor 221 may have an internal cache and various interfaces. The processor 221 realizes various processes by executing programs stored in an internal memory or the memory 222 in advance. The processor 221 is, for example, a CPU.

A part of the various functions realized by execution of the program by the processor 221 may be realized by a hardware circuit. In this case, the processor 221 controls functions performed by the hardware circuit.

The memory 222 stores various data. For example, the memory 222 functions as ROM, RAM and NVM.

For example, the memory 222 stores a control program, control data and the like. The control program and the control data are stored in advance according to the specification of the checkout apparatus 20. For example, the control program is executed to realize the functions by the checkout apparatus 20.

The memory 222 temporarily stores data being processed by the processor 221. Further, the memory 222 may store data necessary for executing an application program, an execution result of the application program, and the like.

The network interface 223 is used for transmitting and receiving data to and from an external device through the network 50. The network interface 223 functions as an interface for transmitting and receiving data to and from the server device 10. For example, the network interface 223 supports LAN connection.

The camera interface 224 is an interface through which the processor 221 communicates with the camera 23. For example, the processor 221 transmits a signal for acquiring an image to the camera 23 through the camera interface 224. The processor 221 may set camera parameters for capturing in the camera 23 through the camera interface 224.

Further, the camera interface 224 acquires an image captured by the camera 23. The camera interface 224 transmits the acquired image to the processor 221. The processor 221 acquires an image captured by the camera 23 from the camera interface 224.

The display interface 225 is an interface through which the processor 221 communicates with the display 24. For example, the processor 221 transmits a display screen to the display 24 through the display interface 225.

The input device interface 226 is an interface through which the processor 221 communicates with the input device 25. For example, the processor 221 receives a signal indicating an operation input through the input device 25 through the input device interface 226.

The camera interface 227 is an interface through which the processor 221 communicates with the camera 26. For example, the processor 221 transmits a signal for acquiring an image to the camera 26 through the camera interface 227. The processor 221 may set camera parameters for capturing in the camera 26 through the camera interface 227.

The camera interface 227 acquires an image captured by the camera 26. The camera interface 227 transmits the acquired image to the processor 221. The processor 221 acquires the image captured by the camera 26 from the camera interface 227.

Next, the item shelf 30 is described.

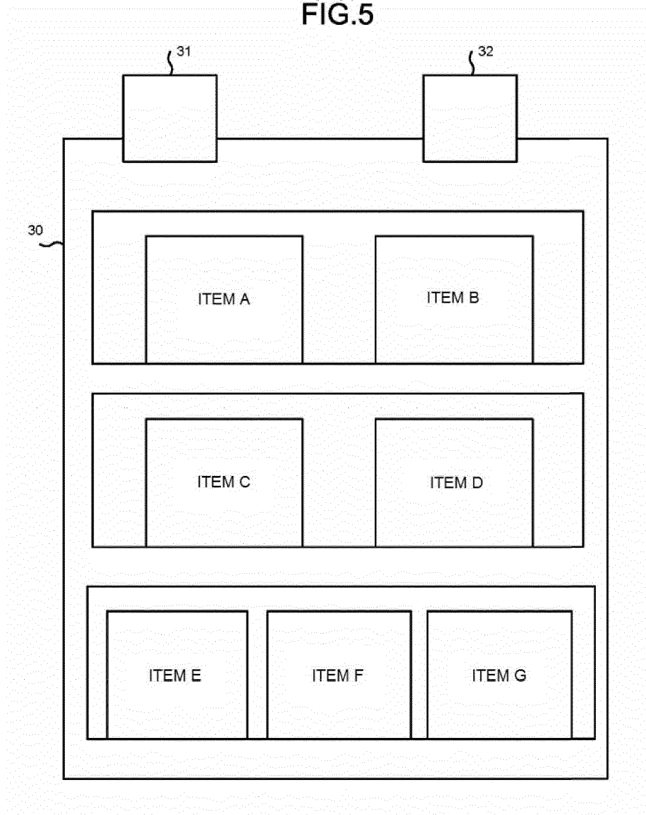

Fig. 5 shows an example of a configuration of the item shelf 30.

The item shelf 30 is arranged to display items at the retail store. The item shelf 30 stores the item in such a manner that the user can take the item down. For example, the item shelf 30 stores the item in such a manner that the item is presented to the outside.

In this case, the item shelf 30 has three storage spaces.

The storage space stores items to be sold to a user. Here, each storage space stores items A and B, items C and D, and items E to G. For example, the storage space is formed so as to place an item or take an item down from a predetermined surface of the item shelf 30. The number and shape of storage spaces provided in the item shelf 30 are not limited to specific configurations.

The item shelf 30 includes the shelf access sensor 31 and the user sensor 32.

The shelf access sensor 31 detects a user who accesses the shelf division. Here, the shelf access sensor 31 detects a user who accesses the item shelf 30 (i.e., the shelf division). The shelf access sensor 31 detects that the user approaches to the item shelf 30 and enters an area in which the item on the item shelf 30 can be taken down. For example, the shelf access sensor 31 detects the user within several meters from the item shelf 30. The shelf access sensor 31 is, for example, an infrared sensor or the like.

If the user is detected, the shelf access sensor 31 transmits to the server device 10 a detection signal indicating that the user is detected.

The shelf access sensor 31 stores a shelf access sensor ID for specifying the shelf access sensor 31. The shelf access sensor 31 stores its own shelf access sensor ID in the detection signal and transmits the detection signal to the server device 10.

The user sensor 32 acquires information for specifying the user who accesses the item shelf 30. Here, the user sensor 32 includes a camera for photographing the face of the user. The user sensor 32 captures the face of the user who accesses the item shelf 30 and sends the captured image to the server device 10.

The user sensor 32 may include a reader that acquires a user ID from the portable terminal.

The configuration of the user sensor 32 is not limited to a specific configuration.

Next, the user information table stored in the storage area 14a is described.

The user information table shows user information relating to the user.

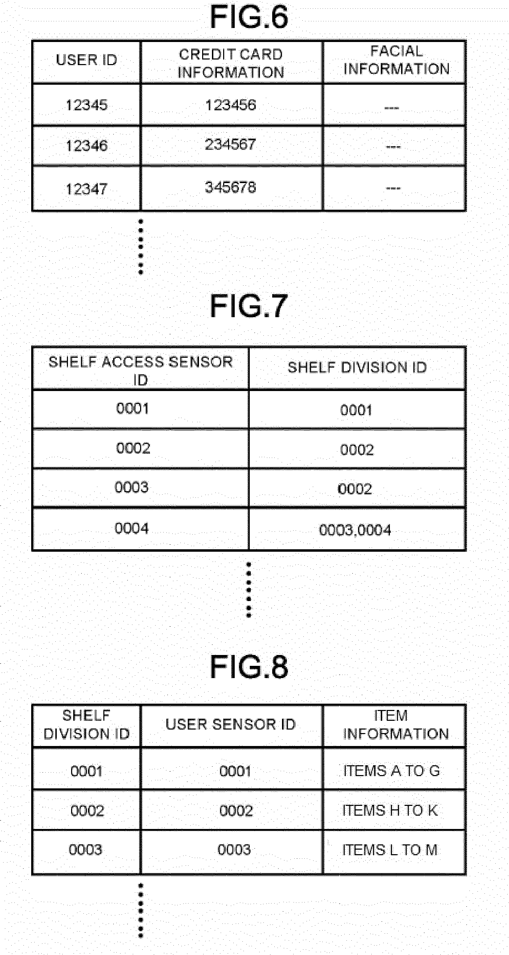

Fig. 6 shows an example of a configuration of the user information table.

As shown in Fig.6, the user information table associates a "user ID" with user information about a user identified by the user ID. The user information table stores "credit card information" and "facial information" as the user information.

The "user ID" is an identifier for identifying the user. The "user ID" is uniquely assigned to the user. The "user ID" may be stored in the portable terminal possessed by the user. For example, the user ID is a numeric value, a character string, or a combination thereof.

The "credit card information" is information that relates to a credit card owned by the user identified by the corresponding user ID. The "credit card information" is necessary for a checkout process by credit card. The "credit card information" includes a credit card number and the like.

The "facial information" is used to specify the user from an image including the face of the user. For example, "the facial information" is a facial image of the user. "The facial image" may include a feature value of the facial image. The configuration of the "facial image" is not limited to a specific configuration.

The user information table is previously stored in the storage area 14a. For example, if the registration of the user is received, the operator creates or updates the user information table through the user interface 16 or the like.

Next, the shelf division ID table stored in the storage area 14b is described.

The shelf division ID table shows a shelf division ID indicating the shelf division.

Fig. 7 shows an example of a configuration of the shelf division ID table.

As shown in Fig. 7, the shelf division ID table associates the "shelf access sensor ID" with the "shelf division ID."

The "shelf access sensor ID" is an identifier for specifying the shelf access sensor 31. The "shelf access sensor ID" is uniquely assigned to the shelf access sensor 31. The "shelf access sensor ID" is stored in the shelf access sensor 31. For example, "shelf access sensor ID" is a numeric value, a character string, or a combination thereof.

The "shelf division ID" is an identifier for identifying the shelf division indicating a predetermined area. The shelf division is an area for storing items to be purchased by the user in the retail store. For example, the shelf division may be a predetermined item shelf 30. The shelf division may be a predetermined storage space of the predetermined item shelf 30. The shelf division may be a plurality of the item shelves 30. The configuration of the shelf division is not limited to a specific configuration.

The "shelf division ID" is uniquely assigned to the shelf division. For example, the "shelf division ID" is a numeric value, a character string, or a combination thereof.

The "shelf division ID" indicates s shelf division where the shelf access sensor 31 identified by the corresponding "shelf access sensor ID" detects the access to the shelf division. In other words, the shelf access sensor 31 identified by the "shelf access sensor ID" detects a user who accesses the shelf division identified by the "shelf division ID".

One "shelf division ID" may be associated with a plurality of "shelf access sensor IDs". In this case, for example, in the shelf division indicated by the "shelf division ID", a plurality of shelf access sensors 31 is installed.

A plurality of "shelf division IDs" may be associated with one "shelf access sensor ID". In this case, for example, one shelf access sensor 31 is installed in a plurality of the shelf divisions.

The shelf division ID table is stored in the storage area 14b in advance. For example, an operator creates or updates the shelf division ID table through the user interface 16.

Next, the shelf division information table stored in the storage area 14c is described.

The shelf division information table shows the shelf division information relating to the shelf division.

Fig. 8 shows an example of a configuration of the shelf division information table.

As shown in Fig. 8, the shelf division information table associates the "shelf division ID" with the shelf division information. The shelf division information table stores the "user sensor ID" and "item information" as the shelf division information.

The "shelf division ID" is as described above.

The "user sensor ID" is an identifier for identifying the user sensor 32 for specifying the user who accesses the shelf division indicated by the corresponding shelf division ID. In other words, the "user sensor ID" indicates the user sensor 32 installed in the shelf division of the "shelf division ID". For example, the "user sensor ID" is a numeric value, a character string, or a combination thereof.

The "item information" indicates an item stored in the shelf division identified by the corresponding shelf division ID. In other words, the "item information" indicates the item provided to the user in the shelf division. The "item information" indicates an item that a user who accesses the shelf division may place in the shopping basket 210. The "item information" may include information about two or more items.

The item information may be an item code or an item name indicating the item.

The shelf division information table is stored in the storage area 14c in advance. For example, the operator creates or updates the shelf division information table through the user interface 16. For example, the "item information" may be generated from shelf assignment information indicating the placement of the item.

Next, the candidate list table stored in the storage area 14d is described.

The candidate list table includes a list (candidate list) of item information (article information) indicating the item (candidate item) that the user may place in the shopping basket 210.

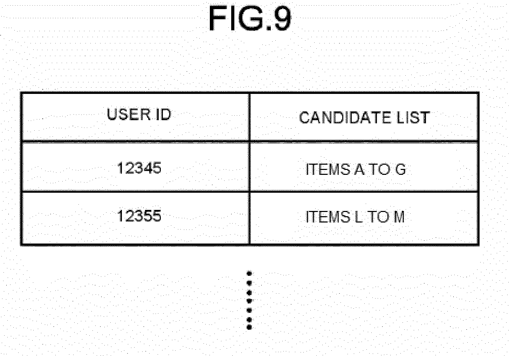

Fig. 9 shows an example of a configuration of the candidate list table.

As shown in Fig. 9, the candidate list table associates the "user ID" with a "candidate list".

The "user ID" is as described above.

The "candidate list" is a list of item information indicating the item that the user identified by the corresponding "user ID" may place in the shopping basket 210. In other words, the "candidate list" is used to list the items stored in the shelf division accessed by the user.

Next, the function realized by the processor 11 of the server device 10 is described. The following functions are realized by execution of programs stored in the memory 14 by the processor 11.

First, the processor 11 has a function of acquiring the user ID of the user who enters the retail store.

The processor 11 photographs the face of the user who enters the retail store using the camera 42 of the entry detection section 40. For example, the processor 11 acquires images from the camera 42 at predetermined intervals to determine whether the face of the user is contained in the captured images. The processor 11 acquires an image (captured image) determined to contain the face.

The processor 11 specifies the user ID of the user appearing in the captured image based on the facial information in the user information table. For example, the processor 11 compares a face area in the captured image with each facial information using techniques such as pattern matching technique.

The processor 11 specifies the facial information matching the face area. The processor 11 acquires the user ID corresponding to the facial information from the user information table.

If there is no facial information matching the face area, the processor 11 issues the user ID for the user. The processor 11 stores the issued user ID and the facial information corresponding to the face area in the user information table in association with each other. The processor 11 may temporarily (for example, until the user leaves the retail store) store the user ID and the facial information in the user information table.

The processor 11 may acquire the user ID from the portable terminal possessed by the user through the reader 41.

The processor 11 has a function of generating a candidate list for the acquired user ID.

If the user ID is acquired, the processor 11 stores the user ID and the candidate list in association with each other in the candidate list table. The processor 11 stores an empty candidate list in the candidate list table.

The processor 11 has a function of specifying the shelf division that the user accesses.

First, the processor 11 determines whether the user accesses the shelf division. For example, the processor 11 determines whether the detection signal indicating that the user accesses the shelf division is received from the shelf access sensor 31 via the network interface 15. If it is determined that the detection signal is received, the processor 11 determines that the user accesses the shelf division.

The processor 11 may determine whether the user accesses the shelf division using the user sensor 32. For example, the processor 11 may determine that the user accesses the shelf division if a distance between a hand of the user and the shelf division reaches a threshold value or lower based on the image from the user sensor 32. The item shelf 30 may include a scale or a weight sensor to measure a weight of the item. The processor 11 may determine that the user accesses the shelf division if the weight measured by the weight sensor becomes lighter.

The method by which the processor 11 determines the access of the user to the shelf division is not limited to a specific method.

If it is determined that the user accesses the shelf division, the processor 11 specifies the shelf division. Specifically, the processor 11 acquires the shelf division ID indicating the shelf division.

The processor 11 acquires the shelf access sensor ID of the shelf access sensor 31 that transmits the detection signal. For example, the processor 11 acquires the shelf access sensor ID from the detection signal.

The processor 11 refers to the shelf division ID table to acquire the shelf division ID corresponding to the shelf access sensor ID. In other words, the processor 11 specifies the shelf division ID indicating the shelf division that the user accesses.

The processor 11 has a function of specifying the user who accesses the shelf division.

The processor 11 specifies the user sensor 32 for specifying the user who accesses the shelf division. Specifically, the processor 11 refers to the shelf division information table to acquire the user sensor ID corresponding to the acquired shelf division ID.

The processor 11 acquires the captured image including the face of the user who accesses the shelf division from the user sensor 32 identified by the acquired user sensor ID. The processor 11 specifies the user ID of the user appearing in the captured image based on the facial information in the user information table. For example, the processor 11 compares the face area in the captured image with each facial information using techniques such as the pattern matching technique.

The processor 11 specifies the facial information matching the face area. The processor 11 acquires the user ID corresponding to the facial information from the user information table.

If faces of many users appear in the captured image, the processor 11 may specify a user closest to the shelf division.

The item shelf 30 may include a reader that reads the user ID from the portable terminal as the user sensor 32. The processor 11 may read the user ID from the portable terminal with the reader. If there are many users within the communicable range of the reader, the processor 11 may acquire a user ID from a portable terminal (closet to the reader) whose signal is strongest in the strength as the user ID of the user who accesses the shelf division.

The processor 11 has a function of acquiring the item information indicating the item stored in the specified shelf division.

The processor 11 refers to the shelf division information table to acquire item information corresponding to the acquired shelf division ID.

The processor 11 has a function of generating a candidate list for storing the acquired item information.

The processor 11 adds the acquired item information to the candidate list associated with the acquired user ID in the candidate list table.

The processor 11 has a function of transmitting the candidate list to the checkout apparatus 20.

For example, the processor 11 receives a request for requesting the candidate list corresponding to a specific user from the checkout apparatus 20 through the network interface 15. For example, the request includes the user ID of the user.

The processor 11 refers to the candidate list table to acquire a candidate list corresponding to the user. For example, the processor 11 acquires the candidate list associated with the user ID stored in the request.

The processor 11 transmits the acquired candidate list to the checkout apparatus 20 as a response to the request through the network interface 15.

Next, the functions realized by the processor 221 of the checkout apparatus 20 are described. The following functions are realized by execution of programs stored in the memory 222 by the processor 221.

First, the processor 221 has the function of acquiring the image of the item that the user takes down from the shelf division. Here, the user takes item down from the shelf division and places it in the shopping basket 210. Further, the user places the shopping basket 210 in a predetermined area of the checkout apparatus 20.

The processor 221 acquires an image obtained by photographing the item in the shopping basket 210.

For example, the processor 221 detects that the shopping basket 210 is placed in a predetermined area. For example, the processor 221 detects that the shopping basket 210 is placed in the housing 21 based on the image from the camera 23.

The checkout apparatus 20 may be provided with a weighing scale in the predetermined area. For example, the processor 221 may detect that the shopping basket 210 is placed on the weighing scale based on a signal from the weighing scale.

If it is detected that the shopping basket 210 is placed, the processor 221 captures an image including the item in the shopping basket 210. For example, the processor 221 transmits a signal for capturing to the camera 23. The processor 221 acquires the captured image from the camera 23. The processor 221 may set the capturing parameters in the camera 23 in order to capture an image.

The processor 221 may acquire the captured image from an external device.

The processor 221 has a function of specifying a user who places the shopping basket 210.

The processor 221 photographs the face of the user who places the shopping basket 210 using the camera 26. For example, if it is detected that the shopping basket 210 is placed in a predetermined area, the processor 221 photographs the face of the user using the camera 26.

Based on the facial information in the user information table, the processor 221 specifies the user ID of the user appearing in the captured image. For example, the processor 221 compares the face area in the captured image with each facial information using techniques such as the pattern matching technique.

The processor 221 specifies the facial information matching the face area. The processor 221 acquires the user ID corresponding to the facial information from the user information table.

The checkout apparatus 20 may include the reader that reads the user ID from the portable terminal. The processor 221 may acquire the user ID from the portable terminal held by the user using the reader.

The processor 221 has a function of acquiring a list (candidate list) of the item (candidate item) in the shelf division that the user accesses from the server device 10 through the network interface 223.

For example, the processor 221 transmits a request for requesting the candidate list of the user to the server device 10. The request includes the user ID of the user. The processor 221 acquires the candidate list of the user as a response to the request.

The processor 221 has a function of extracting an item which is an image area of the item from the captured image.

The processor 221 extracts the item area based on an item image. For example, the processor 221 extracts the item area from the item image by performing edge detection.

The checkout apparatus 20 may include a distance sensor. The processor 221 may acquire distance information indicating a distance from a predetermined position to each section of the captured image using the distance sensor. The processor 221 may extract the item area from the distance information.

The method by which the processor 221 extracts the item area is not limited to a specific method.

The processor 221 has a function of specifying the item in the item area from the candidate items in the candidate list.

For example, the processor 221 acquires dictionary information about the candidate item. The dictionary information is compared with the image of the item area to specify the item in the item area. For example, the dictionary information is an item image or a feature value of the item image. The structure of the dictionary information is not limited to a specific configuration.

For example, the memory 222 may store dictionary information about each item in advance. The processor 221 may acquire the dictionary information about the candidate item from the memory 222.

The processor 221 may acquire the dictionary information from the server device 10.

The processor 221 specifies the item in the item area based on the dictionary information about the candidate item. For example, the processor 221 compares the image of the item area with the dictionary information using techniques such as the pattern matching technique.

The processor 221 specifies the dictionary information matching the image in the item area. The processor 221 specifies the dictionary information (i.e., a feature value) of which a similarity degree with the image in the item area is highest and exceeds a predetermined threshold value. The processor 221 acquires the item information about the item corresponding to the specified dictionary information as the item information indicating the item in the item area.

If the item in the item area cannot be specified from the candidate item, the processor 221 has a function of specifying the item in the item area from the item in the retail store other than the candidate item.

The processor 221 determines that the item in the item area does not match any candidate item if the highest similarity degree is equal to or smaller than the predetermined threshold value for the dictionary information about each candidate item. If it is determined that the item in the item area does not match any candidate item, the processor 221 specifies the item in the item area from other items in the retail store.

For example, the processor 221 acquires the dictionary information about the item other than the candidate item. For example, the processor 221 may acquire the dictionary information from the memory 222. The processor 221 may acquire the dictionary information from the server device 10.

The processor 221 specifies the item of the item area based on the dictionary information. For example, the processor 221 compares the image of the item area with the dictionary information using techniques such as the pattern matching technique.

The processor 221 specifies the dictionary information that matches the image in the item area. The processor 221 specifies the dictionary information of which a similarity degree with the image in the item area is highest and exceeds a predetermined threshold value. The processor 221 acquires the item information about the item corresponding to the specified dictionary information as the item information indicating the item in the item area.

The processor 221 has a function of a checkout process for the specified item.

For example, the processor 221 acquires a price of the specified item.

For example, the memory 222 may store the price of each item in advance. The processor 221 may acquire the price of the item specified from the memory 222.

The processor 221 may acquire the price of the item specified from the server device 10.

The processor 221 handles a checkout process for the item based on the price of the item. For example, the processor 221 acquires credit card information corresponding to the specified user ID from the server device 10. The processor 221 proceeds with the checkout process on the item based on the credit card information.

The processor 221 may receive an input of the credit card information from the user. For example, the processor 221 may acquire the credit card information using a credit card reader or the like.

The processor 221 may execute the checkout process accepting cash, a debit card, electronic money, or the like. The checkout process executed by the processor 221 is not limited to a specific method.

Further, if the checkout process is completed, the processor 221 deletes the candidate list of the server device 10. For example, the processor 221 sends a signal for deleting the candidate list to the server device 10 through the network interface 223. For example, the signal includes the user ID of the user who completes the payment.

The processor 11 of the server device 10 receives the signal through the network interface 15. The processor 11 deletes the candidate list corresponding to the user ID from the candidate list table according to the signal.

The processor 221 may remotely access the memory 14 of the server device 10 to delete the candidate list.

Next, an operation example of the server device 10 is described.

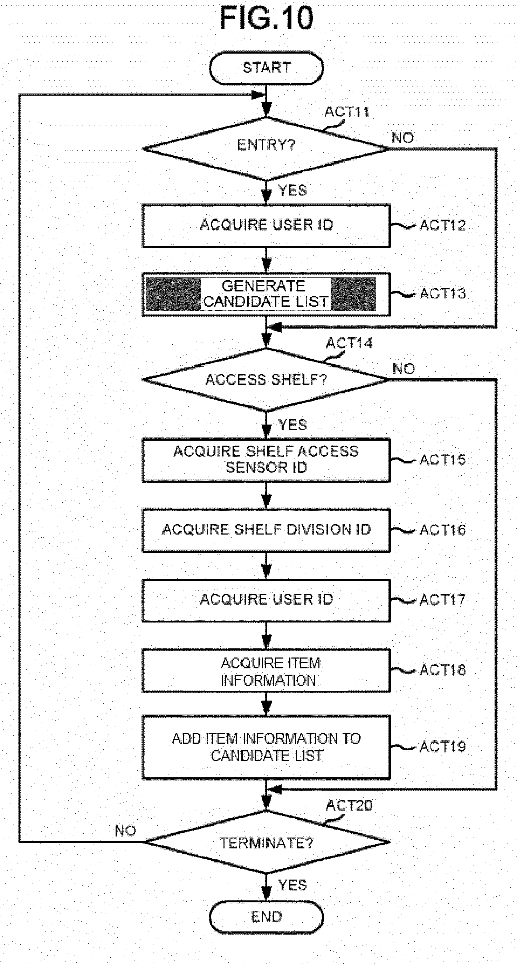

Fig. 10 is a flowchart for depicting an operation example of the server device 10.

First, the processor 11 of the server device 10 determines whether the user enters the retail store with the entry detection section 40 (ACT 11).

If it is determined that the user enters the retail store (Yes in ACT 11), the processor 11 acquires the user ID of the user who enters the retail store (ACT 12). If the user ID is acquired, the processor 11 generates the candidate list corresponding to the acquired user ID in the candidate list table (ACT 13).

If the candidate list corresponding to the acquired user ID is generated, the processor 11 determines whether the user accesses the shelf division (ACT 14). If it is determined that the user accesses the shelf division (Yes in ACT 14), the processor 11 acquires the shelf access sensor ID of the shelf access sensor 31 which detects the user (ACT 15).

If the shelf access sensor ID is acquired, the processor 11 refers to the shelf division ID table to acquire the shelf division ID corresponding to the acquired shelf access sensor ID (ACT 16). If the shelf division ID is acquired, the processor 11 acquires the user ID of the user who accesses the shelf using the user sensor 32 identified by the user sensor ID corresponding to the shelf division ID (ACT 17).

If the user ID is acquired, the processor 11 acquires the item information indicating the item stored in the shelf division indicated by the shelf division ID (ACT 18). If the item information is acquired, the processor 11 adds the acquired item information to the candidate list corresponding to the acquired user ID (ACT 19).

If the item information is added to the candidate list, the processor 11 determines whether to terminate operation of the server device 10 (ACT 20). For example, the processor 11 determines whether an operation to terminate the operation is received through the user interface 16. The processor 11 may determine whether the current time is the time to terminate the operation.

If it is determined that the operation of the server device 10 is not terminated (No in ACT 20), the processor 11 returns to the process in ACT 11.

If it is determined that the operation of the server device 10 is terminated (Yes in ACT 20), the processor 11 terminates the operation.

If it is determined that the user does not access the shelf (No in ACT 14), the processor 11 proceeds to the process in ACT 20.

If it is determined that no user enters the retail store (No in ACT 11), the processor 11 proceeds to the process in ACT 14.

Next, an operation example of the checkout apparatus 20 is described.

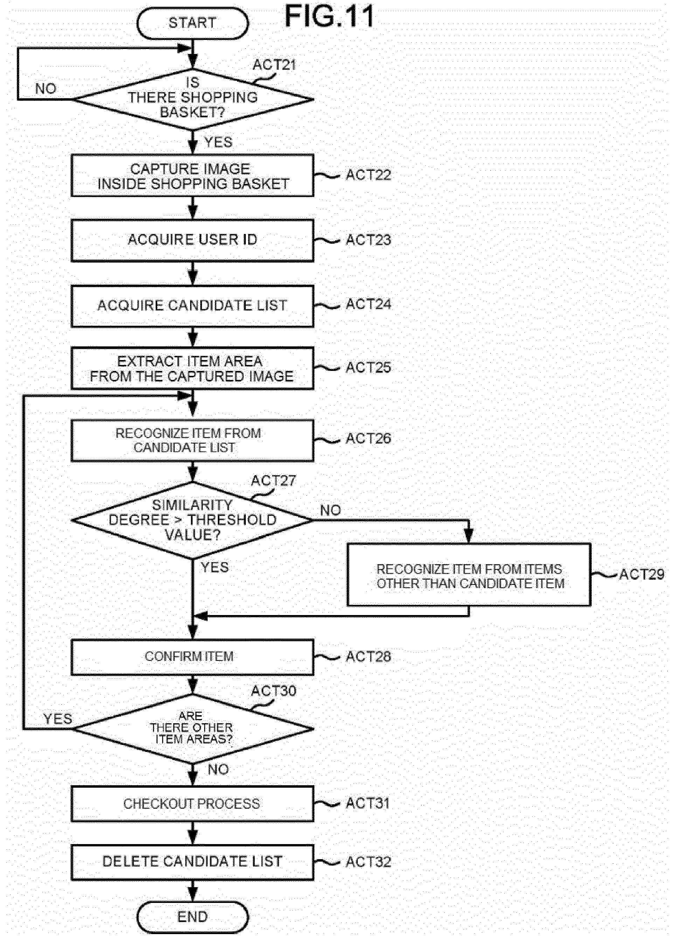

Fig. 11 is a flowchart for depicting an operation example of the checkout apparatus 20.

The processor 221 of the checkout apparatus 20 determines whether the shopping basket 210 is placed in a predetermined area (ACT 21). If it is determined that the shopping basket 210 is not placed in the predetermined area (No in ACT 21), the processor 221 returns to the process in ACT 21.

If it is determined that the shopping basket 210 is placed in the predetermined area (Yes in ACT 21), the processor 221 captures an image inside the shopping basket 210 which contains the item (ACT 22). If the image inside the shopping basket 210 is captured, the processor 221 acquires the user ID of the user who places the shopping basket 210 using the camera 26 (ACT 23).

If the user ID is acquired, the processor 221 acquires the candidate list corresponding to the user ID from the server device 10 (ACT 24). If the candidate list is acquired, the processor 221 extracts the item area from the image obtained by capturing the image inside the shopping basket 210 (ACT 25).

If the item area is extracted, the processor 221 matches one image of the item area with the dictionary information about each candidate item in the candidate list (ACT 26). At the time of matching one image of the item area with the dictionary information about each candidate item in the candidate list, the processor 221 determines whether the highest similarity degree exceeds the threshold value (ACT 27).

If it is determined that the highest similarity degree exceeds the threshold value (Yes in ACT 27), the processor 221 confirms the item information about the item corresponding to the dictionary information with the highest similarity degree as the item information about the item appearing in the item area (ACT 28).

If it is determined that the highest similarity degree does not exceed the threshold value (No in ACT 27), the processor 221 matches one image of the item area with the dictionary information about the item other than the candidate item (ACT 29). If the image in the item area matches the dictionary information about the item other than candidate item, the processor 221 proceeds to the process in ACT 28. In other words, the processor 221 confirms the item information about the item corresponding to the dictionary information having the highest similarity degree among dictionary information about the item other than the candidate item as the item information about the item appearing in the item area.

If the item information is confirmed, the processor 221 determines whether there is an item area for which the item is not determined (ACT 30). If it is determined that there is an item area for which the item is not confirmed (Yes in ACT 30), the processor 221 returns to the process in ACT 26.

If it is determined that there is no item area for which the item is not confirmed (No in ACT 30), the processor 221 executes a checkout process for the confirmed item (e.g., including calculating a price of the item) (ACT 31). When the price is paid and the check process is completed, the processor 221 deletes the candidate list corresponding to the user ID (ACT 32).

If the candidate list corresponding to the user ID is deleted, the processor 221 terminates the operation.

The server device 10 and the checkout apparatus 20 may be realized by the same apparatus.

The server device 10 may realize a part of functions of the checkout apparatus 20. The checkout apparatus 20 may realize a part of functions of the server device 10.

The specifying system described above stores the item stored in the shelf division that the user accesses as the candidate item in the candidate list. When specifying the item possessed by the user, the specifying system specifies the item from the candidate item of the candidate list.

Therefore, the specifying system can specify the item from the candidate items that are most likely possessed by the user. As a result, the specifying system can specify the item from fewer item groups. Therefore, the specifying system can quickly specify the item.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scopeof the invention. The accompanying claims and their equivalents are intended to cover such forms or modifications as would fall within the scope of the invention.

## Claims

1. An image processing apparatus comprising:
a network interface configured to communicate with a server device;
a first camera; and
a processor configured to identify an item presented by a user and imaged by the first camera using a list of items received from the server device through the network interface, wherein
the items in the list are displayed at a location accessed by the user.

2. The image processing apparatus according to claim 1, wherein the processor:
obtains first dictionary information about a feature value of each of the listed items; and
determines that the presented item is one of the listed items by comparing a feature value of the imaged item with the feature value of each of the listed items.

3. The image processing apparatus according to claim 2, wherein when the processor fails to identify the presented item from the list, the processor:
obtains second dictionary information about a feature value of each of items that are not listed in the list; and
determines that the presented item is one of the items not listed in the list by comparing the feature value of the imaged item with the feature value of each of the items not listed in the list.

4. The image processing apparatus according to any one of claims 1 to 3, further comprising:
a second camera, wherein
the processor identifies the user with the second camera and acquires the list of items associated with the user.

5. The image processing apparatus according to claim 4, further comprising:
a scale configured to detect a basket, wherein
when the scale detects the basket, the second camera images the user and the processor acquires the list associated with the imaged user.

6. The image processing apparatus according to any one of claims 1 to 5, wherein
the processor extracts an actual item area for the presented item from the image taken by the first camera.

7. The image processing apparatus according to claim 6, further comprising:
a distance sensor that measures a distance from the sensor to the presented item, wherein
the processer extracts the actual item area based on the measured distance.

8. The image processing apparatus according to any one of claims 1 to 7, wherein:
when the presented item is identified, the processor calculates a price of the presented item.

9. The image processing apparatus according to claim 8, wherein when the price is paid, the processor deletes the list from the server.

10. A method performed by a server device configured to communicate with a sensor and a camera, the method comprising:
receiving a signal from the sensor;
identifying a location of a user based on the signal;
identifying the user with an image imaged by the camera;
acquiring information about items displayed at the identified location; and
storing the acquired information about the items in a memory as candidate items to be purchased by the user.

11. The method according to claim 10, wherein
the sensor is an infra-red sensor, and
when the user approaches the location, the signal is received from the sensor.

12. The method according to claim 10 or 11, wherein
a sensor ID associated with the location is received from the sensor.

13. The method according to any one of claims 10 to 12, wherein
the location is a predetermined division of a shelf.

14. The method according to any one of claims 10 to 12, further comprising
in response to a request from an image processing apparatus for a checkout process, transmitting information about the candidate items to the image processing apparatus.

15. A server device configured to communicate with a sensor and a camera, comprising:
a memory configured to store information about candidate items to be purchased by a user; and
a processor configured to:
receive a signal from the sensor;
identify a location of the user based on the signal;
identify the user with an image imaged by the camera;
acquire information about items displayed at the identified location; and
store the acquired information about the items in the memory as the candidate items to be purchased by the user.
